# EUROPÄISCHE PATENTSCHRIFT

(11) **EP 1 856 339 B1**
(45) Veröffentlichungstag und Bekanntmachung des Hinweises auf die Patenterteilung: **26.12.2012**
(21) Anmeldenummer: 06707506.9
(22) Anmeldetag: 09.03.2006
(51) Int. Cl.: E03C 1/18

(54) **Becken, insbesondere Spülbecken**
Sink, in particular a rinsing sink
Bac de rinçage, en particulier un evier

(30) Priorität: 09.03.2005 DE 102005010907
(43) Veröffentlichungstag der Anmeldung: 21.11.2007
(73) Patentinhaber: Maier, Max, 71636 Ludwigsburg (DE)
(72) Erfinder: EBERHARD, Jürgen, 71726 Benningen (DE)
(74) Vertreter: Menges, Rolf
(86) Internationale Anmeldenummer: PCT/EP2006/002198
(87) Internationale Veröffentlichungsnummer: WO 2006/094816

(56) Entgegenhaltungen:
- WO-A-00/58572
- DE-A1- 3 621 151
- FR-A- 2 514 800
- US-A- 4 456 021
- US-B1- 6 427 259

## Beschreibung

Die Erfindung betrifft ein Becken der im Oberbegriff des Patentanspruchs 1 angegebenen Art. Ein solches Becken ist aus der US-A-4 456 021 bekannt.

Ganz allgemein hat ein solches Becken den Aufbau eines Bain-marie, das so bemessen ist, dass es als Einhängeelement(e) einen oder mehrere GN(Gastro-Norm)-Speisenbehälter aufnehmen kann. Das Bain-marie hat oben einen Rand, der die Auflagen für die Auflageränder der in das Bain-marie längs oder quer einhängbaren GN-Speisenbehälter bildet. Weitere Einzelheiten zu Bain-maries für GN-Behälter finden sich in der Gebrauchsmusterschrift DE 29918 672 U1. Ein Bain-marie ist als Spülbecken weder vorgesehen noch geeignet

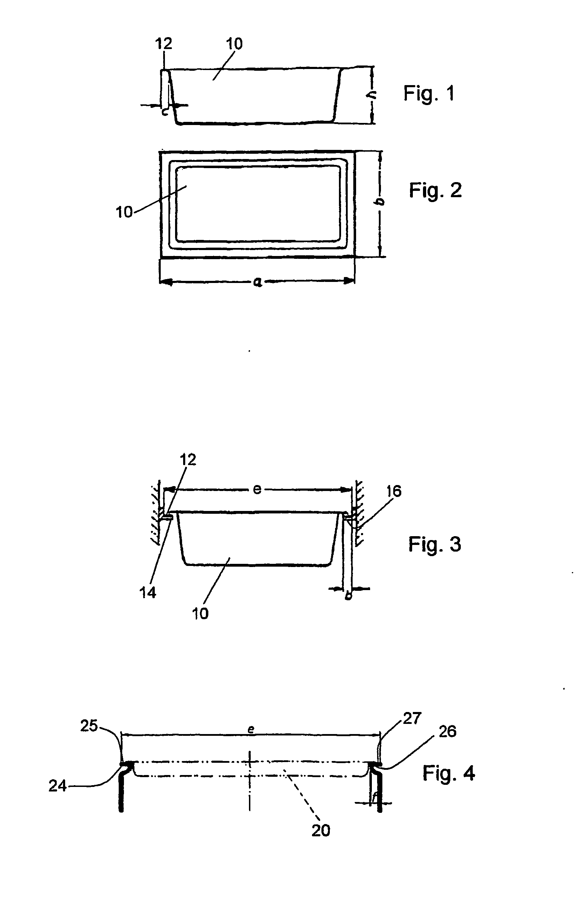

GN-Speisenbehälter der vorgenannten Art sind Gegenstand der Europäischen Norm EN 631-1:1992 und EN 631-2: 1999. Diese Europäische Norm, die den Status einer Deutschen Norm (früher DIN 66075, Blätter 1-5) hat, dient dazu, die Arbeit in Arbeitsabläufen des Catering durch die Schaffung eines hohen Grades von Austauschbarkeit der Küchenetemente zu rationalisieren. Sie beruht auf dem Gastro-Norm-Modulsystem, das von der Europäischen Normen-Kommission für kollektive Haushalte als ein Ergebnis der Normungsaktivitäten durch Organisationen der Gastronomie, Hotellerie und Gemeinschaftsverpflegung in Deutschland, Österreich und in der Schweiz entwickelt wurde. Die Norm EP 631-1 bezieht sich ausschließlich auf die Maße von Speisenbehältern. Die Ränder der Speisenbehälter sind in der Lage, die Masse der mit Speisen gefüllten Behälter zu tragen. Die Norm EN 631-2 legt u.a. die Maße von Auflagen für Speisenbehälter mit Rändern und für Zubehör fest und definiert eine Auflage als den Bereich, der eingesetzte Speisenbehälter und/oder Zubehör trägt. Die genormten Maße von Speisenbehältern, Auflagen, Öffnungen und/oder Ausschnitten für die Aufnahme von Speisenbehältem werden weiter unten mit Bezug auf die Erfindung und unter Bezugnahme auf die beigefügten Figuren 1-5 näher erläutert.

Im Stand der Technik gibt es zwar zahlreiche Becken, die in ihrem oberen Bereich Einhängeelemente aufnehmen können, jedoch sind dabei weder Becken noch Einhängeelemente auf GN-Maße abgestimmt. Solche Becken sind zum Beispiel aus dem bulthaup-Katalog, 2004 S. 138 und 139, bekannt Mehrere derartige Becken können in verschiedenen Breiten und mit einer bestimmten Tiefe in Funktionsflachebenen eingeschweißt werden, wobei diese Becken in Anzahl sowie Position individuell zusammenstellbar sind und mit einem Abtropfbecken gleicher Tiefe ergänzt werden können. Als funktionale Einhängeelemente stehen Reste- und Einhängesleb, Einhängeschale und -becken sowie Schiebeelemente wie Schneidbrett und Schneidwerkzeug zur Verfügung. Diese Einhängeelemente können nur horizontal nebeneinander angeordnet und horizontal verschoben werden.

Aus der Gebrauchsmusterschrift DE 201 17 624 U1 ist eine Spüle bekannt, die ein Hauptbecken und ein Zusatzbecken mit einer Resteschale als Einhängeelement aufweist Ober dem Hauptbecken ist ein Schneidbrett horizontal verschiebbar. Die Resteschale kann dem Zusatzbecken entnommen, Ober das Hauptbecken gehängt und unterhalb des Schneidbrettes quer zu diesem horizontal verschoben werden. Die Auflagen von Schneidbrett und Resteschale sind vertikal eng benachbart im oberen Bereich der Spüle angeordnet, so dass auch nur in diesem Bereich gearbeitet werden kann. Die Arbeitsmöglichkeiten sind daher an einer solchen Spüle naturgemäß begrenzt. Die Resteschale und das Schneidbrett haben keine GN-Maße und sind daher auch nur bei dieser speziellen Spüle einsetzbar.

Die vorstehenden Anmerkungen gelten auch für eine Spüle, die aus der eingangs bereits erwähnten US-A-4 456 021 bekannt ist. Diese bekannte Spüle hat zwei nebeneinander angeordnete Becken. In dem einen, dem größeren Becken sind die in einem oberen Bereich des Beckens ausgebildeten ersten Auflagen für den Rand von einem Schneidbrett bestimmt. Die in dem tiefer gelegenen Bereich des zweiten, kleineren Beckens ausgebildeten zweiten Auflagen sind für den Rand von einem Sieb bestimmt. Das Schneidbrett und das Sieb sind zwar unabhängig voneinander verschiebbar, in der Praxis ist jedoch vorgesehen, dass das Schneidbrett nicht bewegt wird. Das Schneidbrett ist demgemäß aufgrund seiner Endteile, welche auf den ersten Auflagen aufliegen, und aufgrund des zentralen Teils des Schneidbrettes, der nach unten in das Becken hinein vorsteht, sehr fest gegen eine Längsbewegung gesichert. Das Sieb wird zweckmäßig unterhalb des Schneidbrettes aufbewahrt, kann aber im Gebrauch einfach unter dem Schneidbrett so weit hervor gezogen werden, dass Nahrungsmittel, die auf dem Schneidbrett geschnitten oder gehackt werden, zum Spülen oder Abtropfen einfach von dem Schneidbrett herunter in das Sieb geschoben werden können.

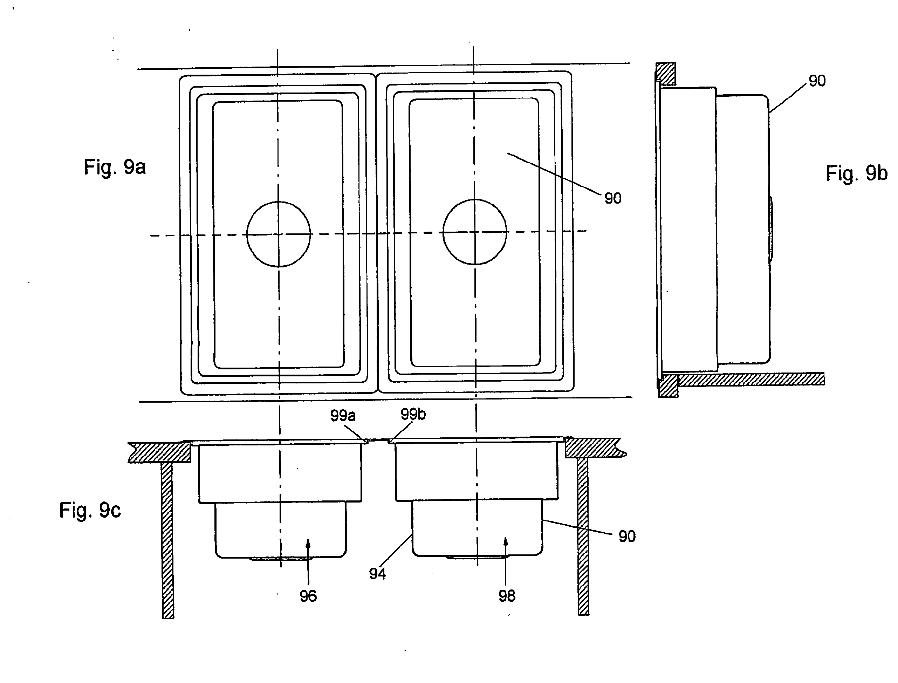

Heute besteht die Tendenz, in einem Spülbecken in mehreren Ebenen übereinander arbeiten zu können. Ein in diese Richtung gehendes Beispiel zeigt die japanische Offenlegungsschrift JP 2003-96858, die ein Spülbecken offenbart, in welche Bretter oder allgemein Tablare zu dritt nebeneinander in unterschiedlichen Höhen einsetzbar sind. Zu diesem Zweck sind in zwei einander gegenüberliegenden Längswänden des Beckens übereinander angeordnete Stufen gebildet. Gemäß Fig. 9 der JP- Offenlegungsschrift ist die linke Längswand treppenförmig ausgebildet, wobei in Richtung zum Boden des Beckens jede folgende Stufe etwas weiter nach innen vorsteht als die ihr vorhergehende Stufe, so dass an dieser Längswand vier Auflagen 5a - 5d ausgebildet sind. In der rechten Längswand sind auch Stufen ausgebildet, wobei aber jede folgende Stufe weiter nach rechts versetzt ist als die ihr vorhergehende Stufe und wobei die Setzstufen zwischen den einzelnen Stufen jeweils schräg gegen die Vertikale angeordnet sind. Dadurch sind in der rechten Längswand vier Auflagen 6a-6d ausgebildet Ein Tablar lässt sich in den unteren Ebenen 5b-6b, 5c-6c oder 5d-6d anordnen, in dem es schräg von oben in das Becken eingeführt und zuerst auf einer Seite auf die betreffende Auflage 6b, 6c oder 6d aufgelegt wird, bevor es anschließend auch auf der anderen Seite abgesenkt und auf die betreffende Auflage 5b, 5c oder 5d aufgelegt wird. Es liegt auf der Hand, dass diese Art des Einsetzens nur für Tablare und nicht für Speisenbehälter geeignet ist, weil deren Inhalt bei dem schrägen Einsetzen verschüttet werden wurde. Außerdem ist diesem Becken und den oben beschriebenen bekannten Becken gemeinsam, dass zum Spülen von Lebensmitteln stets das gesamte Becken mit Wasser gefültt werden muss, was einen hohen Wasserverbrauch bedingt

Aufgabe der Erfindung ist es, ein Becken der eingangs genannten Art so auszubilden, dass es mehr Arbeitsmöglichkeiten bietet und Spülen mit geringerem Wasserverbrauch ermöglicht

Diese Aufgabe ist erfindungsgemäß durch ein Becken mit den im kennzeichnenden Teil des Patentanspruchs 1 angegebenen Merkmalen gelöst.

Bei dem Becken nach der Erfindung können Einhängeelemente mit GN-Maßen sowohl in dessen oberem Bereich als auch unten innerhalb des Beckens in wenigstens einem tiefer gelegenen Bereich desselben eingesetzt und horizontal verschoben werden. Im Unterschied zu dem Becken nach der JP-Offenlegungsschrift können statt Tablaren als Einhängeelemente GN-Speisenbehälter eingesetzt werden, die sowohl im oberen als auch im unteren Bereich horizontal eingehängt und entnommen werden können, so dass der Behälterinhalt dabei nicht verschüttet wird. Das Becken eignet sich daher zum Einsatz in einem System zum Zubereiten von Speisen, in welchem der Transport und die Lagerung von Lebensmitteln, die Vorbereitung von Speisen an einer Spüle, die Zubereitung der Speisen auf einem Herd od. dgl. und schließlich die Warm- oder Kaltausgabe der fertigen Speisen mit ein und demselben GN-Speisenbehälter erfolgen können. Erfindungsgemäß sind Einhängeelemente mit GN-Maßen im Bereich der Spüle in mehreren Ebenen übereinander einsetzbar, wodurch die Vorbereitungsmöglichkeiten (Schneiden, Putzen, Waschen, Portionieren, Zerkleinern, Schälen) wesentlich erweitert werden. Der Koch oder die Hausfrau hat so die Möglichkeit, Speisen ab dem Einkauf bereits im Kühlschrank in einem GN-Speisenbehälter zu lagern, den Behälter in die Spüle einzusetzen für die Vorbereitung der Speisen, denselben Behälter für die Zubereitung der Speisen zu verwenden, beispielsweise unter Verwendung eines GN-Speisenbehälters, der den Gegenstand der nicht vor veröffentlichten Gebrauchsmusterschrift DE 20 2005 019 971 211 bildet und aus Mehrschichtmaterial besteht, und schließlich denselben Behälter zur Ausgabe der zubereiteten Speisen zu verwenden. So lassen sich die Lagerung, Vorbereitung, Zubereitung und Ausgabe von Speisen aus Prozesssicht optimal auf dem Standardmaß nach EN 631 abbilden. Die dafür erforderlichen Funktionselemente wie Kühlschrank, Spüle, Herd und Ausgabe können nunmehr auf GN-Maße abgestimmt werden, so dass GN-Speisenbehälter in der gesamten Prozesskette unterschiedslos einsetzbar sind. Dadurch, dass das Becken nach der Erfindung in wenigstens einem tiefer gelegenen Bereich kleiner ausgebildet ist als in dem oberen Bereich, und zwar abgestimmt auf GN-Maße, kann ein und derselbe GN-Speisenbehälter, der im oberen Bereich mit wenigstens zwei einander gegenüberliegenden Rändem auf zwei einander gegenüberliegende Auflagen aufsetzbar ist, in dem unteren Bereich quer dazu auf zwei einander gegenüberliegende, einen kleineren Abstand als im oberen Bereich aufweisende Auflagen aufgesetzt werden. Bei Bedarf kann ein Speisenbehälter zusätzlich zum Spülen eingesetzt werden. Das Spülwasser kann in das Becken entleert werden. Da der Speisenbehälter stets ein kleineres Volumen als das Becken hat, wird so erheblich weniger Wasser verbraucht. Das Becken nach der Erfindung kann am Boden einen üblichen Ablauf aufweisen. In einer nicht beanspruchten Ausführungsform kann das Becken auch nur als ein nach unten offener Ausschnitt in einem Arbeitstisch oder in einem anderen Becken ausgebildet sein.

Da gemäβ der Erfindung in wenigstens einem Teil des Beckens in dessen oberem Bereich die ersten Auflageabstände in Richtung der Länge oder der Breite des Beckens GN- Abmessungen aufweisen, lassen sich im oberen Bereich des Beckens unterschiedliche GN-Speisenbehälter als Einhängeelemente einsetzen. So kann beispielsweise ein GN-Speisenbehälter der Größe 1/1, also der Grundmodulgröße in das Becken in dessen oberem Bereich so eingesetzt werden, dass er nur an seinen in Längsrichtung gelegenen Enden aufliegt Ein Speisenbehälter der Größe 2/3 kann dann in dem oberen Bereich quer eingesetzt werden, so dass er nur in seiner Längsrichtung auf zwei einander gegenüberliegenden Seiten aufliegt.

Vorteilhafte Ausgestaltungen des Beckens nach der Erfindung bilden die Gegenstände der abhängigen Patent ansprüche.

Wenn in einer Ausgestaltung des Beckens nach der Erfindung die ersten Auflagen an oder nahe bei dem oberen Rand des Beckens ausgebildet oder angebracht sind, lässt sich an dem Becken in dem oberen Bereich in der obersten möglichen Ebene arbeiten.

Wenn in weiterer Ausgestaltung des Beckens nach der Erfindung die zweiten Auflagen von der Wand des Beckens nach innen vorstehend ausgebildet oder angebracht sind, sind wahlweise alle GN-Einhängeelemente einsetzbar, deren Maße den Auflageabständen in dem unteren Bereich entsprechen.

Wenn in weiterer Ausgestaltung des Beckens nach der Erfindung wenigstens einige der ersten bzw. zweiten Auflagen jeweils als ein von der Wand des Beckens vorstehender Sims ausgebildet sind, lässt sich das Becken beispielsweise auf einfache Weise durch Tiefzlehen in einem oder mehreren Teilen, die dann verschweißt werden, herstellen.

Wenn in weiterer Ausgestaltung des Beckens nach der Erfindung wenigstens einige der ersten bzw. zweiten Auflagen als an der Wand des Beckens angebrachte Auflageschienen ausgebildet sind, lässt sich beispielsweise ein für eine Arbeitsebene hergestelltes Becken, bei dem Einhängeelemente nur am oberen Rand aufsetzbar wären, durch das Vorsehen von zusätzlichen Auflageschienen in wenigstens einem tiefer gelegenen Bereich zu einem Becken umrüsten, das mehrere Arbeitsebenen bietet.

Wenn in weiterer Ausgestaltung des Beckens nach der Erfindung die zweiten Auflagen zusätzlich einen von dem Boden des Beckens nach oben vorstehenden Sockel aufweisen, der das Becken wenigstens in dem unteren Bereich in Teilbacken unterteilt, lässt sich zum Spülen der Wasserverbrauch im Vergleich zu einem Füllen des gesamten Beckens verringern, weil als eigentliches Spülbecken eines der Teilbecken eingesetzt werden kann.

Wenn in einer weiteren Ausgestaltung des Beckens nach der Erfindung zusätzlich die ersten Auflagen an dem Sockel ausgebildet oder angebracht sind, der so hoch ausgebildet ist, dass er das Becken in dem unteren und in dem oberen Bereich in Teilbecken unterteilt, ergeben sich bei einfacherer Herstellung des Beckens tiefere Teilbecken, die sich bei Bedarf bis auf die volle Beckenhöhe mit Wasser füllen lassen.

Wenn in weiterer Ausgestaltung des Beckens nach der Erfindung nur ein erster Teil des oberen Bereiches des Beckens in einen tiefer gelegenen Bereich übergeht, lässt sich beispielsweise der übrige Teil des oberen Bereiches des Beckens als Arbeitsfläche, Abtropffläche oder Abtropfbecken nutzen.

Wenn in weiterer Ausgestaltung des Beckens nach der Erfindung der erste Teil und der übrige Teil des oberen Bereiches des Beckens rechtwinkelig zueinander angeordnet sind, bietet das Becken Arbeitsmöglichkeiten in zwei horizontalen Richtungen und beansprucht weniger Platz.

Wenn in weiterer Ausgestaltung des Beckens nach der Erfindung die Einhängeelemente GN-Speisenbehälter, GN-Speisenbehälter mit Perforationen und/oder anderes GN-Zubehör sind, lässt sich das Becken in allen übereinander und gegebenentalls nebeneinander angeordneten Bereichen mit den nach der Norm verfügbaren Einhängeelementen voll ausnutzen. Als GN-Zubehör stehen beispielsweise Schneidbretter, Schneidwerkzeuge und Körbe zur Verfügung, die wie GN-Speisenbehälter in das Becken nach der Erfindung einsetzbar und darin verschiebbar sind.

Ausführungsbeispiele der Erfindung werden im Folgenden unter Bezugnahme auf die Zeichnungen näher beschrieben. Es zeigen
- Fig. 1: einen GN-Speisenbehälter in Seitenansicht,
- Fig. 2: den GN-Speisenbehälter nach Fig. 1 in Draufsicht,
- Fig. 3: den Einsatz von Auflageschienen als Auflagen für den Rand eines GN-Speisenbehälters,
- Fig. 4: den Einsatz von simsartigen Führungen mit Auflageflächen als Auflagen für den Rand eines GN-Speisenbehälters,
- Fig. 5a und 5b: in Seitenansicht bzw. Draufsicht nach EN 631-2 die Maße von Öffnungen und/oder Ausschnitten für die Aufnahme eines Speisenbehälters,
- Fig. 6a: ein Ausführungsbeispiel eines Beckens nach der Erfindung in Draufsicht,
- Fig. 6b: mehrere in ein Becken nach Fig. 6a einsetzbare GN-Speisenbehälter,
- Fig. 6c: das Becken nach Fig. 6a im Querschnitt,
- Fig. 6d: das Becken nach Fig. 6a im Längsschnitt,
- Fig. 7a: ein weiteres Ausführungsbeispiel des Beckens nach der Erfindung in Draufsicht,
- Fig. 7b: mehrere In das Becken nach Fig. 7a einsetzbare Speisenbehälter,
- Fig. 7c: das Becken nach Fig. 7a im Querschnitt,
- Fig. 7d: das Becken nach Fig. 7a im Längsschnitt,
- Fig. 8a: ein weiteres Ausführungsbeispiel des Beckens nach der Erfindung in Draufsicht,
- Fig. 8b: das Becken nach Fig. 8a im Querschnitt,
- Fig. 8c: das Becken nach Fig. 8a im Längsschnitt,
- Fig. 9a: ein weiteres Ausführungsbeispiel des Beckens nach der Erfindung in Draufsicht,
- Fig. 9b: das Becken nach Fig. 9a im Querschnitt,
- Fig. 9c: das Becken nach Fig. 9a im Längsschnitt,
- Fig. 10a: ein weiteres Ausführungsbeispiel des Beckens nach der Erfindung in Draufsicht,
- Fig. 10b: das Becken nach Fig. 10a im Querschnitt,
- Fig. 10c: das Becken nach Fig.10a im Längsschnitt,
- Fig. 11a: ein weiteres Ausführungsbeispiel des Beckens nach der Erfindung in Draufsicht,
- Fig. 11b: das Becken nach Fig. 11a im Querschnitt,
- Fig. 11c: das Becken nach Fig. 11a im Längsschnitt,
- Fig. 12a: einen Arbeitstisch, der mit einem Becken nach der Erfindung versehen bzw. nach Art eines Beckens ausgebildet ist, und
- Fig. 12b: den Arbeitstisch nach Fig. 12a in Seitenansicht.

Wenn im Folgenden von einem Speisenbehälter die Rede ist, so ist dabei stets ein Speisenbehälter mit GN-Maßen gemeint.

Wenn hier oder in den Ansprüchen von einem Becken od. dgl. die Rede ist, so sollen unter dem Begriff Becken nicht nur Becken an sich, sondern allgemein auch Öffnungen und/oder Ausschnitte von Arbeitstischen, Bain-maries und fahrbaren Geräten für die Aufnahme von Speisenbehältern verstanden werden.

In den Fig. 1-5 sind verschiedene Speisenbehälter und Auflagen nach EN 631-1 mit ihren genormten Maßbezeichnungen gezeigt, die zur Erleichterung der Beschreibung der Ausführungsbeispiele der Erfindung im Folgenden verwendet werden.

Fig. 1 zeigt einen Speisenbehälter 10 mit einem Auflagerand 12 in Seitenansicht, der eine Höhe h und eine Auflagerandbreite c hat. Fig. 2 zeigt den Speisenbehälter 10 nach Fig. 1 in Draufsicht. Der Speisenbehälter 10 hat eine Länge a und eine Breite b. Diese Maße sind durch EN 631-1 festgelegt. Nach dieser Norm gibt es Behälter der Größen 2/1, 1/1, 1/2, 2/3, 1/3, 1/6, 1/9, 1/4, 2/8 und 2/4. Ein Speisenbehälter der Größe 1/1 bildet den Grundmodul für die Normung. Bei ihm betragen die Abmessungen a = 530 mm, b = 325 mm und h = 20, 40, 65, 100, 150 oder 200 mm. Die Maße der übrigen Größen von Speisenbehältern finden sich in vorgenannter Norm auf S. 3 in Tabelle 1, auf die zur Vermeidung von Wiederholungen verwiesen wird. Alle bei dem Becken nach der Erfindung einsetzbaren Speisenbehälter haben die genormten Außenmaße a, b, c und h, die je nach Bedarf wählbar sind.

Zu diesen Speisenbehältem gehören nach EN 631-2 genormte Maße des Zubehörs und der Auflagen, da Zubehör und Auflagen gemeinsam mit Speisenbehältem nach EN 631-1 verwendet werden müssen. Fig. 3 zeigt den Speisenbehälter 10, der mit seinem Rand 12 auf zwei jeweils an einer Wand angebrachten Auflageschienen 14, 16 aufliegt. Die Maße für e und f ergeben sich aus EN 631-2, S. 2, Tabelle 1. Zum Beispiel beträgt für Speisenbehälter der Größen 2/1, 1/1 und 2/4 das Maß e = 535 mm und das Maß f =12 mm, wohingegen für Speisenbehälter der Größen 1/1, 2/3, 1/3 und 2/8 das Maß e = 330 mm und das Maß f = 12 mm beträgt.

In Fig. 4 sind als Auflagen für den Rand eines Speisenbehälters 20 jeweils simsartig in einer Wand ausgebildete Führungen 24, 26 mit Auflageflächen 25 bzw. 27 dargestellt.

Der Speisenbehälter 20 ist im Gegensatz zu dem tieferen Speisenbehälter 10 nach den Fig. 1 - 3 eine flache Schale. Die Höhe h der Speisenbehälter bestimmt den gegenseitigen Abstand der übereinander gelegenen Bereiche des Beckens und umgekehrt.

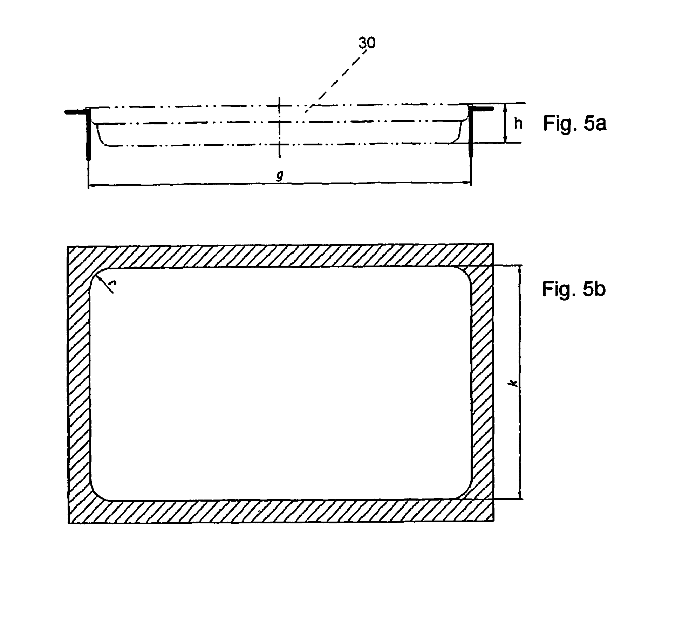

Die Fig. 5a und 5b veranschaulichen, wie durch EN 631-2 die Maße g und k der Öffnung eines Beckens nach der Erfindung und/oder von Ausschnitten von Arbeitstischen, Bain-maries und fahrbaren Geräten für die Aufnahme von Speisenbehältem festgelegt sind. Die Maße g und k der Öffnungen betragen bei einem Speisenbehälter der Größe 2/1 zum Beispiel g = 630 mm und k = 510 mm und bei einem Speisenbehälter der Größe 1/1 zum Beispiel g = 510 mm und k = 305 mm. Bei den oben und im Folgenden beschriebenen Becken od. dgl. nach der Erfindung werden diese Maße eingehalten. Fig. 5a zeigt einen Speisenbehälter 30 mit einer Tiefe h, die zwischen der Höhe des Speisenbehälters 10 und der Höhe des Speisenbehälters 20 liegt.

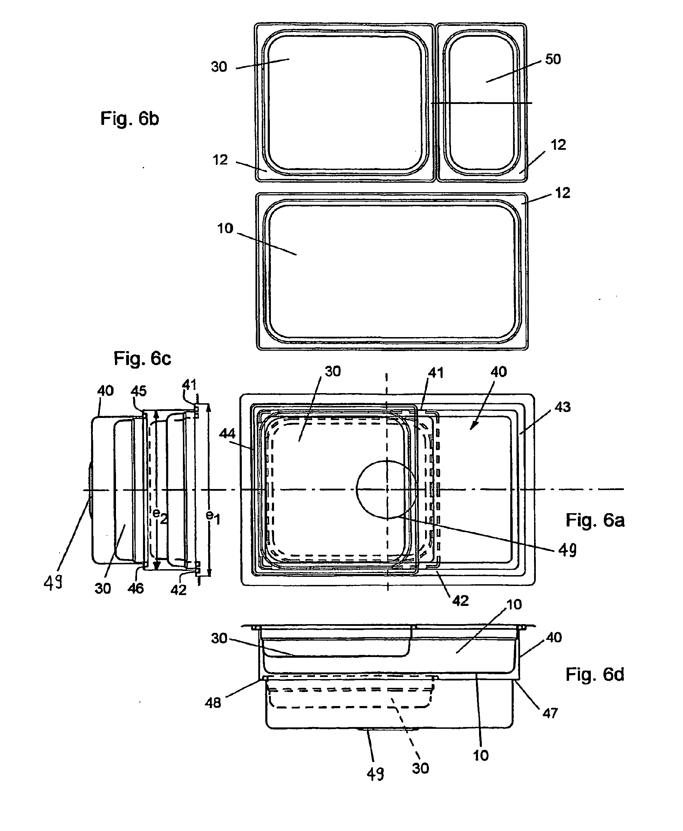

Fig. 6a zeigt ein Ausführungsbeispiel eines Beckens 40 nach der Erfindung in Draufsicht Die Fig. 6c und 6d zeigen das Becken 40 im Querschnitt bzw. im Längsschnitt. Fig. 6b zeigt drei in das Becken 40 einsetzbare Speisenbehäfter, und zwar einen Speisenbehälter 10 der Größe 1/1, einen Speisenbehälter 30 der Größe 2/3 und einen Speisenbehälter 50 der Größe 1/3. Das Becken 40 ist als ein Spülbecken mit einem Ablauf 49 dargestellt. Das Becken 40 hat einen umlaufenden Rand, dessen einander gegenüberliegende Längsseiten erste Auflagen 41, 42 und dessen einander gegenüberliegende Breitseiten weitere erste Auflagen 43, 44 für den Rand 12 der Speisenbehälter 10, 30, 50 bilden. Die ersten Auflagen 41-44 sind in einem oberen Bereich des Beckens 40, hier an dessen oberem Rand gebildet, wie es aus den Fig. 6c und 6d ohne weiteres ersichtlich ist Die ersten Auflagen 41 und 42 sowie 43 und 44 haben horizontale erste Auflageabstände e1 und Auflagebreiten f, wie sie mit Bezug auf Fig. 3 beschrieben worden sind. Allerdings sind die ersten Auflageabstände e1 in Fig. 6 in Richtung der Breite des Beckens um einen GN-Bruchteil größer, als es für den als zugeordnetes Einhängeelement mit GN-Größe vorgesehenen Speisenbehälter 10 erforderlich wäre. Für den Speisenbehälter 10 wäre der Auflageabstand 330 mm erforderlich. Tatsächlich beträgt der Auflageabstand e1 = 359 mm, so dass der Speisenbehälter 30 quer in das Becken 40 eingesetzt werden kann, wobei er dann mit seinen beiden Breitseiten auf den Auflagen 41, 42, aufliegt, wohingegen der Speisenbehälter 10 der Größe 1/1 mit seinen Breitseiten auf den Auflagen 43, 44 aufliegt, mit seinen Längsseiten aber nicht aufliegt, wie es der Darstellung in den Fig. 6c und 6d ohne weiteres zu entnehmen ist. In den Fig. 6c und 6d sind zwar der Speisenbehälter 10 und der Speisenbehälter 30 in dem oberen Bereich des Beckens 40 gemeinsam dargestellt, das soll jedoch nur die Einsatzmöglichkeiten veranschaulichen. Selbstverständlich ist nur jeder einzeln für sich in den oberen Bereich des Beckens 40 einsetzbar. Zusätzlich zu dem Speisenbehälter 30 ist der Speisenbehälter 50 in dem oberen Bereich des Beckens 40 einsetzbar (nicht dargestellt).

In einem tiefer gelegenen Bereich des Beckens 40 sind innerhalb desselben zweite Auflagen 45, 46, 47, 48 für wenigstens ein weiteres Einhängeelement mit GN-Maßen ausgebildet, wobei dieses Einhängeelement in dem in Fig. 6 dargestellten Ausführungsbeispiel der Speisenbehälter 30 ist, welcher in Fig. 6d gegenüber der Anordnung in Fig. 6b quer auf die zweiten Auflagen aufsetzbar ist. Die zweiten Auflagen 45 - 48 haben zwar horizontale zweite Auflageabstände e2 mit GN-Maßen, diese sind jedoch wenigstens in Richtung der Länge oder der Breite des Beckens 40 um einen GN-Bruchteil kleiner als die ersten Auflageabstände e1. In dem in Fig. 6 dargestellten Ausführungsbeispiel bedeutet das, dass die zweiten Auflageabstände e2 der Auflagen 45 und 46 kleiner sind als die ersten Auflageabstände e1 der Auflagen 41, 42 und hier 330 mm betragen. Daher ist der Speisenbehälter 30 in der in Fig. 6b dargestellten Lage in das Becken 40 in dessen unterem Bereich einsetzbar, wie es in den Fig. 6c mit ausgezogenen Linien gezeigt und in den Fig. 6a und 6d mit gestrichelten Linien angedeutet ist. Der GN-Bruchteil, um den der Auflageabstand e2 zwischen den Auflagen 45 und 46 kleiner ist als der Auflageabstand e1 zwischen den Auflagen 41 und 42 entspricht somit dem Größenunterschied des Speisenbehälters 30 in Längs- und Querrichtung. Statt des Speisenbehälters 30 können in den unteren Bereich des Beckens 40 zwei Speisenbehälter 50 eingesetzt werden (nicht dargestellt). Die in dem unteren Bereich des Beckens 40 neben den beiden Speisebehältern 50 verbleibende Öffnung kann durch ein passendes Füllstück (nicht dargestellt) abgedeckt werden. Solche Füllstücke können in allen passenden Größen bereitgestellt werden, so dass bei Bedarf die neben dem Speisenbehälter oder neben den Speisenbehältern in den einzelnen Bereichen verbleibenden Öffnungen abgedeckt werden können. Die Füllstücke sind dabei so bemessen, dass sie wie die Speisenbehälter wenigstens an zwei entgegengesetzten Enden auf den zugeordneten Auflagen aufliegen.

In dem vorstehend geschilderten Beispiel wird in dem oberen Bereich des Beckens 40 der Speisenbehälter 10 der Größe 1/1 eingesetzt, der die Abmessungen 530 x 325 hat. Der Auflageabstand e1 wird 359 mm und damit breiter gewählt, als es der Breite von 325 mm des Speisenbehälters 10 entspricht. Das ermöglicht es dann, in dem darunter gelegenen Bereich den Auflageabstand mit e2 = 330 mm so zu wählen, dass er für einen Speisenbehälter geeignet ist, bei welchem wenigstens die Länge oder die Breite 325 mm beträgt, wie zum Beispiel der Speisenbehälter 30 der Größe 2/3. Es gibt mehrere Größen von Speisenbehältem, bei denen das Maß 325 mm vorkommt, nämlich die Größen 1/1, ½, 2/3,1/3 und 2/8, was EN 631-1 ohne weiteres zu entnehmen ist. In dem oberen Bereich kann in dem vorstehend geschilderten Beispiel der Speisenbehälter 30 quer eingesetzt werden, weil die Größe des Auflageabstands e1 = 359 mm seiner Länge von 354 mm angepasst ist. In dem tiefer gelegenen Bereich des Beckens 40 kann dann der Speisenbehälter in der Orientierung, wie sie in Fig. 6b gezeigt ist, in das Becken 40 eingesetzt werden, wie es Fig. 6d zeigt. Wenn in dem Becken in noch einem weiteren tiefer gelegenen Bereich (nicht dargestellt) Speisenbehälter eingesetzt werden sollen, so würden in dem vorstehend geschilderten Beispiel Maße gewählt werden, die beispielshalber auf einen Speisenbehälter der Größe 1/4 abgestimmt sind.

In Fig. 6 sind die ersten und zweiten Auflagen 41-44 bzw. 45 - 48 als von der Wand des Beckens 40 vorstehende Simse ausgebildet wie die Auflagen 24, 26. Statt der Simse könnten an einer Beckenwand, die nicht stufenförmig ausgebildet ist, Auflageschienen angebracht werden, wie sie in Fig. 3 dargestellt sind. Wenn das Becken in der Höhe keinerlei Abstufung aufweist, müssten die Auflageschienen 14, 16 im unteren Bereich breiter ausladend sein als in dem oberen Bereich des Beckens 40.

Eine weitere Variante bestünde darin, im oberen Bereich des Beckens die Auflagen 41 - 44 als Simse auszubilden, wie dargestellt, und im unteren Bereich des Beckens statt der Auflagen 45 - 48 Auflageschienen der in Fig. 3 dargestellten Art vorzusehen.

In Fig. 6 würde es ausreichen, im unteren Bereich des Beckens 40 lediglich an den beiden Längsseiten desselben die Auflagen 45 und 46 vorzusehen, denn nur auf diesen Auflagen kommt dort das Becken 30 oder das Becken 50 mit zwei Rändern zur Auflage. Das zusätzliche Vorsehen der Auflagen 47, 48 in dem unteren Bereich des Beckens 40 ist herstellungsbedingt und nicht von Nachteil, weil das Becken 30 so gegebenenfalls auf drei Seiten aufliegen kann, wie es in Fig. 6d zu erkennen ist. Der Speisenbehälter 30 könnte in Fig. 6d in dem unteren Bereich auch mittig angeordnet werden, denn es genügt, wenn er auf zwei einander gegenüberliegenden Seiten auf den Auflagen 45 und 46 aufliegt. Die links und rechts von dem Speisenbehälter 30 verbleibenden Öffnungen könnten durch passend bemessene Füllstücke verschlossen werden, wie sie oben bereits erläutert worden sind.

Gemäß der Darstellung in Fig. 6 und auch in den übrigen Figuren weist das Becken zumindest im Bereich seines Bodens dort, wo dieser in die Seitenwand übergeht, Rundungen auf. Diese Rundungen ergeben sich notwendigerweise, wenn das Becken durch Tiefziehen hergestellt wird. Heutzutage verlangen Kunden immer häufiger Becken, die solche Rundungen nicht aufweisen. Es ist daher vorgesehen, das Becken auch ohne solche Rundungen als Schweißteil herzustellen.

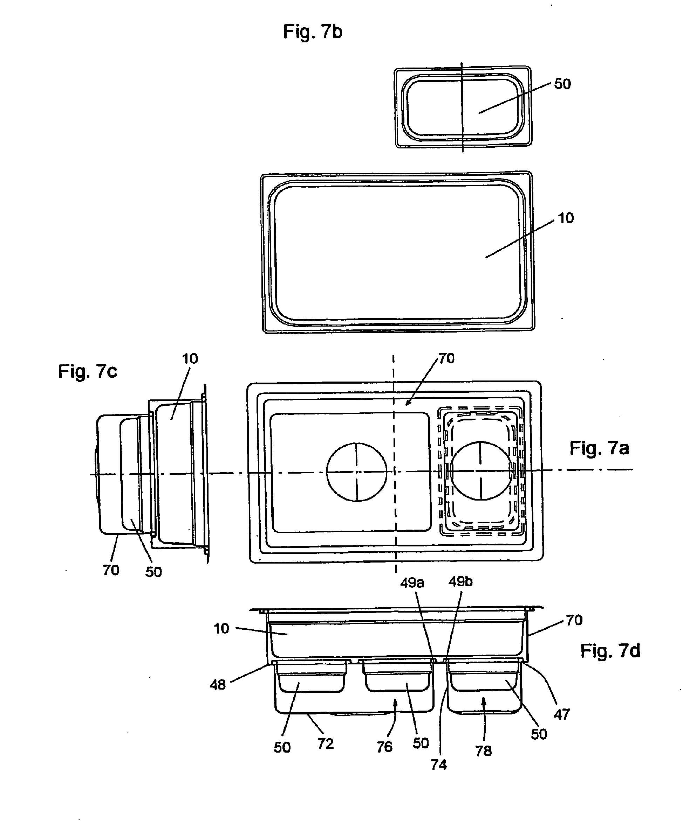

Fig. 7a zeigt ein weiteres Ausführungsbeispiel des Beckens nach der Erfindung in Draufsicht, das mit 70 bezeichnet ist. Fig. 7b zeigt in das Becken 70 einsetzbare Speisenbehälter 10 und 50 der Größe 1/1 bzw. 1/4. In dem in Fig. 7 dargestellten Ausführungsbeispiel sind die Auflageabstände so bemessen, dass im oberen Bereich des Beckens 70 der Speisenbehälter 10 an allen vier Rändern aufliegt. Die Fig. 7c und 7d zeigen das Becken 70 im Querschnitt bzw. im Längsschnitt und lassen ohne weiteres die vorgenannte Art des Aufliegens des Speisenbehälters 10 erkennen. Weiter weist das Becken 70 einen Boden 72 auf, von dem aus ein Sockel 74 nach oben vorsteht. Der Sockel 74 ist so hoch ausgebildet, dass er das Becken 70 in dem unteren Bereich in zwei Teilbecken 76, 78 unterteilt. Zusätzlich zu den Auflagen 47, 48 sind an dem Sockel 74 an dessen oberem Ende Auflagen 49a, 49b ausgebildet. In dem in Fig. 7 dargestellten Ausführungsbeispiel lassen sich in den unteren Bereich des Beckens 70 drei Speisenbehälter 50 der Größe 1/4 auf in den Figuren 7a, 7c und 7d dargestellte Weise einsetzen.

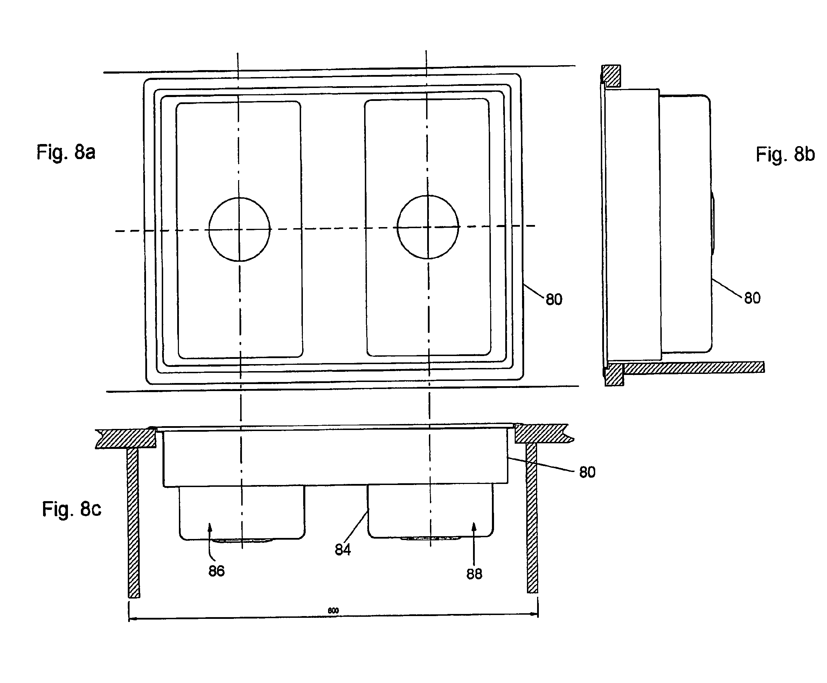

Die Fig. 8a - 8c zeigen als ein weiteres Ausführungsbeispiel ein Becken 80, das sich von dem Ausführungsbeispiel nach Fig. 7 hauptsächlich dadurch unterscheidet, dass ein Sockel 84 das Becken 80 in seinem unteren Bereich in zwei gleich große Teilbecken 86 und 88 unterteilt.

Fig. 9a zeigt als ein weiteres Ausführungsbeispiel ein Becken 90 in Draufsicht, das in Fig. 9b im Querschnitt und in Fig. 9c im Längsschnitt gezeigt ist. Unterschiedlich zu der Ausführungsform nach Fig. 8 ist, dass das Becken einen Sockel 94 aufweist, der so hoch ausgebildet ist, dass er das Becken 90 in dem unteren und in dem oberen Bereich in Teilbecken 96, 98 unterteilt. In dem Ausführungsbeispiel nach Fig. 9 sind simsartige erste und zweite Auflagen in der Wand des Beckens 90 und an dem Sockel 94 ausgebildet. Stattdessen könnten statt der simsartigen Ausbildung auch an der Beckenwand und an dem Sockel angebrachte Auflageschienen vorgesehen werden (nicht dargestellt), wie sie weiter oben mit Bezug auf Fig. 3 erläutert worden sind.

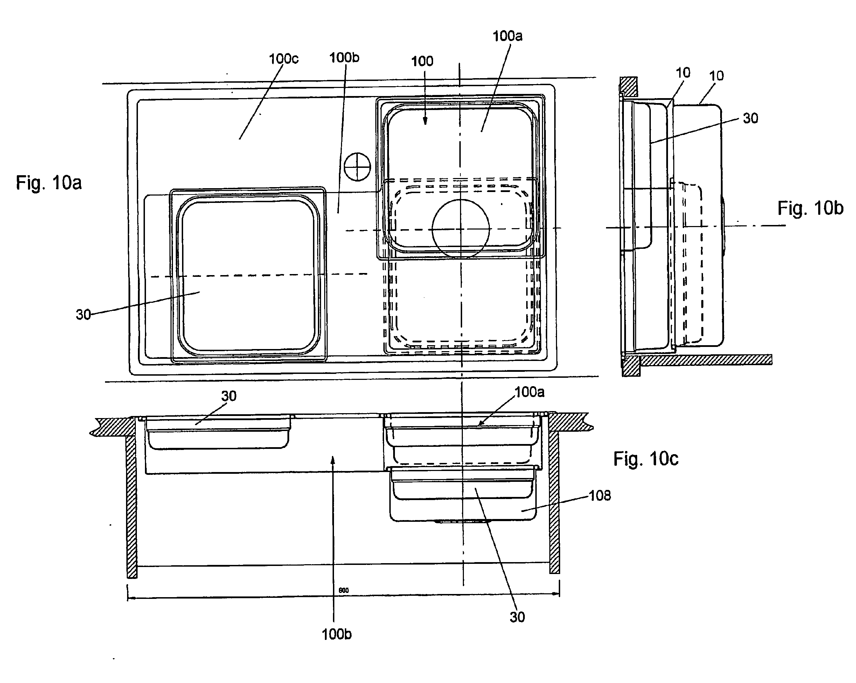

Fig. 10a zeigt als ein weiteres Ausführungsbeispiel ein Becken 100 in Draufsicht, das in Fig. 10b im Querschnitt und in Fig. 10c im Längsschnitt gezeigt ist. Unterschiedlich gegenüber dem oben beschriebenen Ausführungsbeispiel ist hauptsächlich, dass nur ein erster Teil 100a des oberen Bereiches des Beckens 100 in einen tiefer gelegenen Bereich übergeht, in welchem ein Teilbecken 108 gebildet ist. Der erste Teil 100a und der übrige Teil 100b des Beckens 100 sind rechtwinklig zueinander angeordnet, wie es in der Draufsicht in Fig. 10a zu erkennen ist. In dem Ausführungsbeispiel nach Fig. 10 ist ein aufgrund der rechtwinkligen Anordnung verbleibender dritter Teil 100c des Beckens als Abtropffläche nutzbar.

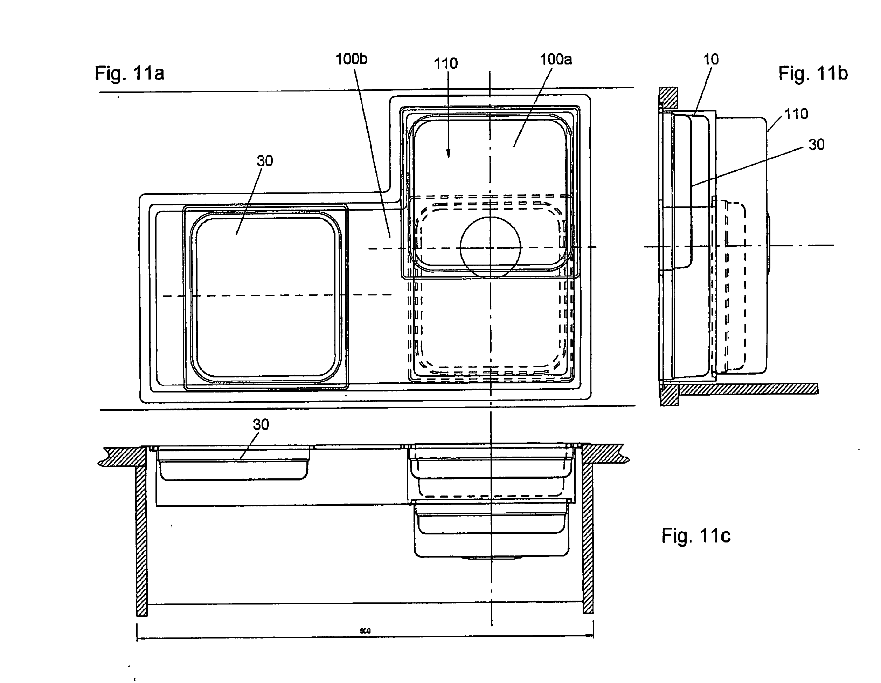

Fig. 11a zeigt als ein weiteres Ausführungsbeispiel ein Becken 110, bei dem ein dritter Teil 100c wie in Fig. 10a weggelassen worden ist. Das Becken 110 ist in Fig. 11a in Draufsicht, in Fig. 11b im Querschnitt und in Fig. 11c im Längsschnitt dargestellt und entspricht ansonsten dem in Fig. 10 dargestellten Becken 100, so dass es hier nicht näher beschrieben zu werden braucht.

Die in Draufsicht rechtwinkelige Beckenausbildung nach den Fig. 10 und 11 kann bei Bedarf auch durch eine U-förmige Ausbildung ersetzt werden. In den Beispielen der Fig. 10 und 11 würde dann das Becken 100 bzw. 110 zusätzlich auch links von den Beckenteilen 100b, 100c bzw. von dem Beckenteil 100b vorgesehen werden (nicht dargestellt).

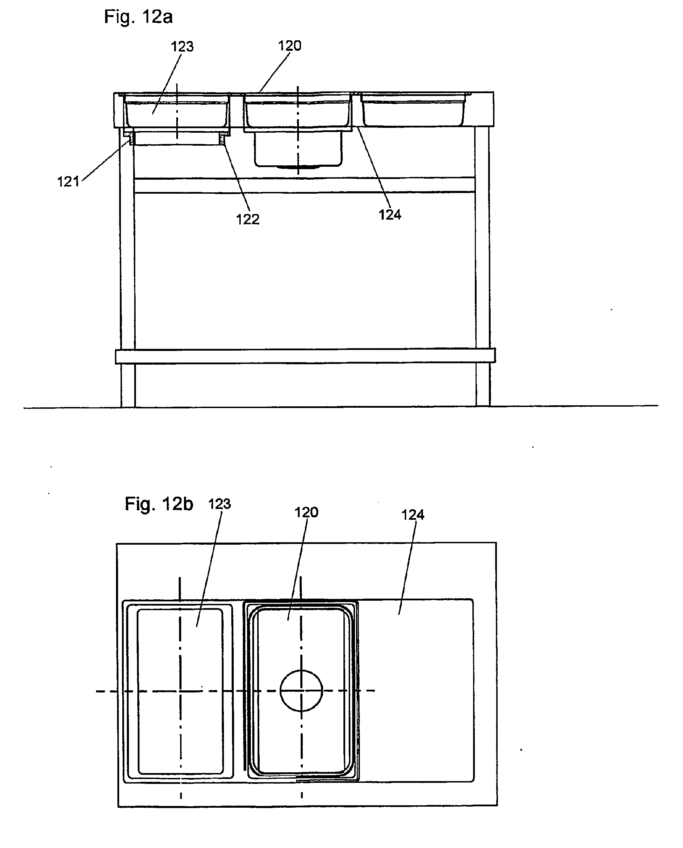

Fig. 12a zeigt einen Arbeitstisch, der mit einem Becken 120 versehen ist, das in seiner in Fig. 12a linken Hälfte einen Ausschnitt 123 aufweist. In Fig. 12b ist der Arbeitstisch in Draufsicht gezeigt. Das Becken 120 hat im Wesentlichen einen Aufbau der oben bereits beschriebenen Art. Lediglich in dem linken Teil in den Figuren 12a und 12b sind Auflageschienen 121, 122 um den Ausschnitt 123 des Beckens 120 angebracht, welche Auflagen für einen oder mehrere in den unteren Bereich des Beckens 120 einzusetzende Speisenbehälter (nicht dargestellt) bilden. Der Ausschnitt 123, der hier in der linken Hälfte des Beckens 120 vorgesehen ist, könnte auch einfach in dem Arbeitstisch selbst vorgesehen sein. Ähnlich wie die Auflageschienen 121, 122 wären dann Auflageschienen in einer oberen Ebene des Tisches vorgesehen und, wie dargestellt, in einer tiefer gelegenen Ebene des Tisches. Das Becken 120 würde in diesem Fall lediglich aus dem in den Fig. 12a und 12b rechts dargestellten Teil bestehen. Die zweite, tiefer gelegene Ebene des Tisches ist in den Fig. 12a und 12b mit 124 bezeichnet. Sie kann durch eine weitere Tischplatte gebildet sein. Rechts von dem Becken 120 kann auf diese Tischplatte ein Speisenbehälter gestellt werden, wie es in Fig. 12a, aber nicht in Fig. 12b dargestellt ist. Der vorstehend geschilderte Aufbau soll auch veranschaulichen, dass es für die Erfindung nicht darauf ankommt, dass ein unten durch einen Boden abgeschlossenes Becken vorhanden ist. In einer nicht beanspruchten Ausführungsform kann das Becken vielmehr nach unten hin offen sein, also ein beckenähnliches Gebilde sein, welches z.B. über einem Abfallbehälter od. dgl. angeordnet ist (nicht gezeigt).

## Patentansprüche

1. Becken, insbesondere Spülbecken,
mit in einem oberen Bereich des Beckens ausgebildeten ersten Auflagen (41 - 44) mit jeweils einem horizontalen ersten Auflageabstand (e1) in Richtung der Länge und der Breite des Beckens (40) für den Rand von wenigstens einem Einhängeelement (10, 30, 50) und
mit in wenigstens einem tiefer gelegenen Bereich des Beckens (40) ausgebildeten zweiten Auflagen (45 - 48) mit einem horizontalen zweiten, kleineren Auflageabstand (e2) in Richtung der Länge und/oder der Breite des Beckens (40),
**dadurch gekennzeichnet, dass** die horizontalen ersten und zweiten Auflageabstände (e1, e2) jeweils EN 631-2:1999 - Maße haben,
dass sich der erste Auflageabstand (e1) in Richtung der Länge des Beckens (40) und der erste Auflageabstand (e1) in Richtung der Breite des Beckens (40) um eine Größe unterscheiden, die dem Größenunterschied eines Einhängeelements mit EN 631-1:1992-Maßen in Längs- und Querrichtung entspricht, und
dass die zweiten Auflageabstände (e2) wenigstens in Richtung der Länge oder der Breite des Beckens (40) um diesen Größenunterschied kleiner als die ersten Auflageabstände (e1) sind,
so dass ein und dasselbe Einhängeelement (30) mit EN 631-1:1992-Maßen, das im oberen Bereich mit wenigstens zwei einander gegenüberliegenden Rändern auf zwei einander gegenüberliegende erste Auflagen aufsetzbar ist, in dem unteren Bereich quer dazu auf zwei einander gegenüberliegende, einen kleineren Abstand (e2) aufweisende zweite Auflagen aufsetzbar ist.

2. Becken nach Anspruch 1, **dadurch gekennzeichnet, dass** die ersten Auflagen (41 -44) an oder nahe bei dem oberen Rand des Beckens (40) ausgebildet oder angebracht sind.

3. Becken nach Anspruch 1 oder 2, **dadurch gekennzeichnet, dass** die zweiten Auflagen (45 - 48) von der Wand des Beckens (40) nach innen vorstehend ausgebildet oder angebracht sind.

4. Becken nach Anspruch 2 oder 3, **dadurch gekennzeichnet, dass** wenigstens einige der ersten bzw. zweiten Auflagen (41 - 44, 45 - 48) jeweils als ein von der Wand des Beckens vorstehender Sims ausgebildet sind.

5. Becken nach einem der Ansprüche 2 bis 4, **dadurch gekennzeichnet, dass** wenigstens einige der Auflagen als an der Wand des Beckens angebrachte Auflageschienen (14, 16; 121, 122) ausgebildet sind.

6. Becken nach einem der Ansprüche 3 bis 5, **dadurch gekennzeichnet, dass** die zweiten Auflagen (45 - 48) an einem von dem Boden (72) des Beckens (70) nach oben vorstehenden Sockel (74) ausgebildet oder angebracht sind, der so hoch ausgebildet ist, dass er das Becken (70) wenigstens in dem unteren Bereich in Teilbecken (76, 78) unterteilt.

7. Becken nach den Ansprüchen 2 und 6, **dadurch gekennzeichnet, dass** zusätzlich die ersten Auflagen (99a, 99b) an dem Sockel (94) ausgebildet oder angebracht sind, der so hoch ausgebildet ist, dass er das Becken (90) in dem unteren und in dem oberen Bereich in Teilbecken (96, 98) unterteilt.

8. Becken nach einem der Ansprüche 1 bis 7, **dadurch gekennzeichnet, dass** nur ein erster Teil (100a) des oberen Bereiches des Beckens (100) in einen tiefer gelegenen Bereich (108) übergeht.

9. Becken nach Anspruch 8, **dadurch gekennzeichnet, dass** der erste Teil (100a) und der übrige Teil (100c) des oberen Bereiches des Beckens (100) rechtwinkelig zueinander angeordnet sind.

10. Becken nach einem der Ansprüche 1 bis 9, dadurch gekennzeichet, dass die Einhängeelemente (10, 30, 50) EN 631-1:1992 Speisenbehälter, EN 631-1:1992 Speisenbehätter mit Perforationen und/oder anderes EN 631-1:1992 Zubehör sind.

## Claims

1. A sink, in particular a rinsing sink,
comprising first supports (41-44), which are embodied in an upper area of the sink, each comprising a horizontal first support distance (e1) in the direction of the length and the width of the sink (40) for the edge of at least one suspension element (10, 30, 50) and
comprising second supports (45-48), which are embodied in at least a lower area of the sink (40), comprising a horizontal second, smaller support distance (e2) in the direction of the length and/or the width of the sink (40),
**characterized in that** the horizontal first and second support distances (e1, e2) have each EN 631-2:1999 measures,
that the first support distance (e1) in the direction of the length of the sink (40) and the first support distance (e1) in the direction of the width of the sink (40) differ by a size, which corresponds to the difference in size of a suspension element comprising EN 631-1:1992 measures in longitudinal and transverse direction, and
that the second support distances (e2) at least in the direction of the length or of the width of the sink (40) are smaller than the first support distances (e1) by this difference in size,
so that one and the same suspension element (30) comprising
EN 631-1:1992 measures, which, in the upper area comprising at least two edges, which are located opposite one another, can be put onto two first supports, which are located opposite one another, and, in the lower area at right angles thereto, can be put onto two second supports, which are located opposite one another and which have a smaller distance (e2).

2. The sink according to claim 1, **characterized in that** the first supports (41-44) are embodied or attached to on or close to the upper edge of the sink (40).

3. The sink according to claim 1 or 2, **characterized in that** the second supports (45-48) are embodied or attached so as to protrude inwardly from the wall of the sink (40).

4. The sink according to claim 2 or 3, **characterized in that** at least some of the first or second supports (41-44, 45-48), respectively, are each embodied as a ledge, which protrudes from the wall of the sink.

5. The sink according to any one of claims 2 to 4, **characterized in that** at least some of the supports are embodied as support rails (14, 16; 121, 122), which are attached to the wall of the sink.

6. The sink according to any one of claims 3 to 5, **characterized in that** the second supports (45-48) are embodied on or attached to a pedestal (74), which protrudes upwards from the bottom (72) of the sink (70) and which is embodied to be so high that it divides the sink (70) into partial sinks (76, 78) at least in the lower area.

7. The sink according to claims 2 and 6, **characterized in that** the first supports (99a, 99b) are additionally embodied on or attached to the pedestal (94), which is embodied to be so high that it divides the sink (90) into partial sinks (96, 98) in the lower and in the upper area.

8. The sink according to one of claims 1 to 7, **characterized in that** only a first part (100a) of the upper area of the sink (100) merges into a lower area (108).

9. The sink according to claim 8, **characterized in that** the first part (100a) and the remaining part (100c) of the upper area of the sink (100) are arranged at right angles to one another.

10. The sink according to any one of claims 1 to 9, **characterized in that** the suspension elements (10, 30, 50) are EN 631-1:1992 food containers, EN 631-1:1992 food containers comprising perforations and/or other EN 631-1:1992 accessories.

## Revendications

1. Cuve, en particulier évier,
comprenant des premiers supports (41 - 44) conçus dans une zone supérieure de la cuve avec respectivement un premier espacement de support (e1) horizontal en direction de la longueur et de la largeur de la cuve (40) pour le bord d'au moins un élément suspendu (10, 30, 50) et
des seconds supports (45 - 48) conçus dans au moins une zone située plus bas de la cuve (40) avec une seconde distance de support (e2) horizontale, plus petite en direction de la longueur et/ou de la largeur de la cuve (40),
**caractérisée en ce que** les premiers et seconds espacements (e1, e2) horizontaux ont respectivement des dimensions EN 631-2:1999,
**en ce que** le premier espacement de support (e1) en direction de la longueur de la cuve (40) et le premier espacement de support (e1) en direction de la largeur de la cuve (40) se différencient d'une grandeur qui correspond à la différence de grandeur d'un élément suspendu présentant des cotes EN 631-1:1992 dans le sens longitudinal et le sens transversal, et
**en ce que** les seconds espacements de support (e2) au moins en direction de la longueur ou de la largeur de la cuve (40) sont inférieurs de cet écart de grandeur aux premiers espacements de support (e1),
de sorte qu'un seul et même élément suspendu (30) présentant des cotes EN 631-1:1992, qui peut être posé dans la zone supérieure avec au moins deux bords se faisant face sur deux premiers supports se faisant face, peut être posé dans la zone inférieure transversalement à celle-ci sur deux seconds supports se faisant face et présentant un espacement (e2) inférieur.

2. Cuve selon la revendication 1, **caractérisée en ce que** les premiers supports (41 - 44) sont conçus ou placés sur ou à proximité du bord supérieur de la cuve (40).

3. Cuve selon la revendication 1 ou 2, **caractérisée en ce que** les seconds supports (45 - 48) sont conçus ou placés en dépassant de la paroi du bassin (40) vers l'intérieur.

4. Cuve selon la revendication 2 ou 3, **caractérisée en ce qu'**au moins certains des premiers ou des seconds supports (41 - 44, 45 - 48) sont conçus respectivement sous la forme d'une moulure dépassant de la paroi de cuve.

5. Cuve selon l'une des revendications 2 à 4, **caractérisée en ce qu'**au moins certains des supports sont conçus sous forme de rails de support (14, 16 ; 121, 122) placés sur la paroi de la cuve.

6. Cuve selon l'une des revendications 3 à 5, **caractérisée en ce que** les seconds supports (45-48) sont conçus ou placés sur un socle (74) dépassant du fond (72) de la cuve (70) vers le haut, lequel socle est conçu suffisamment élevé pour qu'il subdivise la cuve (70) au moins dans la zone inférieure en cuves partielles (76, 78).

7. Cuve selon les revendications 2 et 6, **caractérisée en ce que**, en supplément, les premiers supports (99a, 99b) sont réalisés ou placés sur le socle (94), qui est conçu suffisamment élevé pour qu'il subdivise la cuve (90) dans la zone inférieure et dans la zone supérieure en cuves partielles (96, 98).

8. Cuve selon l'une des revendications 1 à 7, **caractérisée en ce que** seule une première partie (100a) de la zone supérieure de la cuve (100) fait place à une zone (108) située plus bas.

9. Cuve selon la revendication 8, **caractérisée en ce que** la première partie (100a) et la partie (100c) restante de la zone supérieure de la cuve (100) sont disposées à angle droit l'une par rapport à l'autre.

10. Cuve selon l'une des revendications 1 à 9, **caractérisée en ce que** les éléments suspendus (10, 30, 50) sont des récipients pour aliments EN 631-1:1992, des récipients pour aliments EN 631-1:1992 avec des perforations et/ou d'autres accessoires EN 631-1:1992.
